# EUROPEAN PATENT APPLICATION

(11) **EP 0 841 140 A2**
(43) Date of publication of application: **13.05.1998**
(21) Application number: 97309023.6
(22) Date of filing: 10.11.1997
(51) Int. Cl.: B29C 33/56, B29C 33/62

(54) **Method of enhancing releasing effect of mould using low temperature plasma processes**

(30) Priority: 12.11.1996 KR 9653337
(71) Applicant: Chun, Bae Hyeock, Seoul (KR); Lee, Byoung Chul, Seoul (KR); Cho, Dong Lyun, Kwangju-shi (KR)
(72) Inventor: Chun, Bae Hyeock, Seoul (KR); Lee, Byoung Chul, Seoul (KR); Cho, Dong Lyun, Kwangju-shi (KR)
(74) Representative: Slingsby, Philip Roy

(57) **Abstract**

Disclosed is a method for enhancing the releasing effect between a mould and a cured mould compound during injection or transfer moulding. The method of enhancing the releasing effect of the mould according to the present invention is accomplished by coating the mould surface with a thin layer or layers of plasma polymer. The present invention consists of 2 basic steps. The 1st step is pre-treatment of the mould with inert or reactive plasma gas. The 2nd step is plasma deposition of a thin film. The present invention can decrease the critical surface tension of the mould surface and make the injection or transfer moulding of plastics without any releasing agent and also decrease carbonization or polymerization of releasing agent. The plasma pre-treatment and plasma polymerization can be carried out by using RF(radio frequency), DC(direct current), AC (alternative current) power supply etc. and the mould itself can be used as a cathode or the electrode. The system pressure during the plasma processes are in the range of 0.001- 30 torr.

## Description

The present invention relates to a method for enhancing the releasing effect between a mould and a cured mould compound during injection or transfer moulding. More particularly, the present invention relates to a method of decreasing a critical surface tension of the mould surface and enhancing the releasing effect by coating the mould surface with a thin layer or layers of low temperature plasma formed organic polymer.

In general, the number of plastic articles are produced by injection or transfer moulding processes. But the critical surface tension of metal materials used for moulds are so high (several hundred to thousand Nm/m²) that the cured resin parts stick to the mould and can't be easily released. (It can be assumed that the paint is more adhesive on a metal surface than a glass or a plastic surface.) So, in order to release the cured resin parts from the mould easily, releasing agent has to be added to the moulding compound of resin, stabilizers, colorants, fillers, reinforcing agents and so on. The polyester wax is mostly used as releasing agent and the portion among the moulding compound is around 0.5 to 1.0 wt %.

However, the releasing agents have following disadvantages. For example, in microelectronic chips packaging process, (1) it hinders the curing of the polymer melt parts, (2) it leaves contaminants on the mould surface after the curing of the polymer by carbonization or polymerization, (3) it doesn't have any compatibility with the lead frame, so it makes a gap between a lead frame and polymer part for package which cause an easy corrosion on the lead frame, and (4) the releasing agent contained in polymer part makes it hard to print a trademark on chips.

Among them, the carbonization or the polymerization is the most serious problems. So the mould surface has to be cleaned by solvent (for example, M-PYROL (1-methyl-2-pyrrolidinone)) or transfer or injection moulded by melamine mould cleaning compound. But these cleaning methods cause secondary problems as follows; (1) the moulding processes (injection or transfer moulding) have to be shut down during the cleaning process and the productivity becomes lower, and (2) M-PYROL causes pollution in the form of VOC (volatile organic content).

It is well known that the critical surface tension of a polymer is much lower than that of metal so that it is hard for other materials to adhere to the surface of a polymer. For example, in order to decrease the critical surface tension Teflon (poly-4-fluoroethylene) can be coated on a frying pan by sintering process. But Teflon coating process cannot be recommended for the mould coating, because it is hard for this process to control the thickness of deposited film and to enhance the adhesion strength of film on the mould which is required to endure the shear stress during injection or transfer processes.

It is known that plasma deposition of thin film gives a very dense layer of film, with uniform deposition, no "pin hole", and good adhesion.

It has been disclosed that it is possible to deposit thin polymer films on metal substrate by plasma polymerization. The plasma deposition of organic film on metals is generally described in an article entitled "Surface Coating of Metals in Glow Discharge" in the Journal of the Oil and Colour Chemists Association, Vol. 48, 1965. This article describes in general terms a method of coating a steel substrate with thin polymer films derived from organic vapours (styrene, acrylate, butadiene and diethyl silicate) using glow discharge (i.e. plasma deposition) for short term corrosion protection. But the process does not teach and suggest decreasing the critical surface tension of metals.
Professor Yasuda disclose some basics of plasma energy level, the deposition of organosilanes, and oxygen cleaning of the steel substrate in an article entitled Plasma Polymerization at combined Energy Input for Protective Coating of Metal, published in the Journal of Applied Polymer Science: Applied Polymer Symposium 42, 233 (1988). However, this article does not disclose decreasing the critical surface tension of metal.

The use of polysiloxane as the deposited film in glow discharge for corrosion protection of steel is also disclosed in Japanese Patent No. Sho 51 [1976]-83030 issued to Aoki. This disclosure also teaches the use of AC power but does not suggest the decreasing the critical surface tension.

What is needed is a method depositing a thin film layer on a variety of different mould substrates to decrease the critical surface tension and to give enhanced releasing effect. It has been discovered that plasma polymerized thin film shows good adhesion to a metal mould, this thin polymer film has a very low critical surface tension, mould compound without any releasing agent can be transfer or injection moulded, and mould compound with releasing agent don't leave any contaminants or leaves less contaminants on the surface of the mould during the transfer or injection moulding processes. This novel method can also decrease the number of cleaning steps to clean the surface of the mould.

One purpose of the present invention is to provides the method of decreasing the critical surface tension of the mould and to enhance the releasing effect of the mould instead of adding releasing agent into resin compound to enhance the releasing effect of the resin parts from the mould.

The present invention provides a method of decreasing a critical surface tension and enhancing the releasing effect by coating the mould surface with a thin layer or thin layers of low temperature plasma formed organic polymer.

The present invention consists of 2 basic steps. The 1st step is pretreating of the mould surface with inert gas (e.g. argon) or reactive gas (e.g. oxygen) plasma. The 2nd step is plasma polymer deposition of a thin film or thin films on the mould surface by plasma polymerization of monomer (e.g. hydrocarbons, fluorocarbons, organosilanes etc.) or mixture of monomers which can make the resin parts to be released from the metal mould easily during the transfer or injection moulding processes.

The plasma polymer deposited on the mould surface releases the cured mould compound transfer moulded easily. And in the case of EMC(epoxy moulding compound) with releasing agent, the process can be operated longer without any contamination.

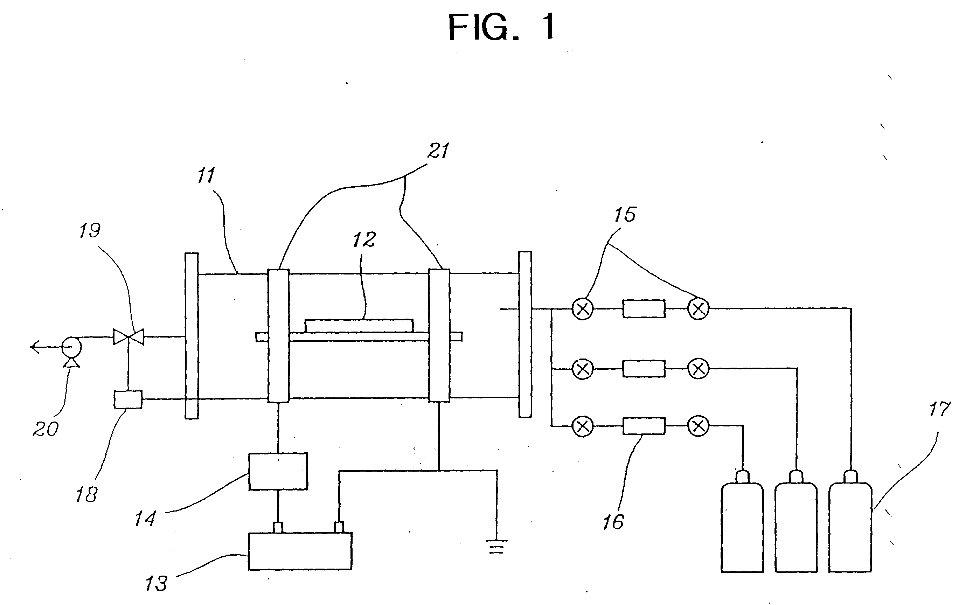

FIG. 1 is a schematic of our plasma deposition system showing vacuum chamber, electrodes, RF power supply, related piping and so forth.

It has been found that a simple coating system, which involves plasma treatment, works as effective way of modifying a mould surface.

This invention relates to the use of low temperature technology to coat thin polymer film on the mould surface to decrease the critical surface tension of a metal mould surface and to enhance the releasing effect of the mould.

Our novel system is usable with a variety of different type of mould steel (or metal) (e.g., HSP, ASP, AISI and so forth) in a variety of different sizes and shapes.

Low temperature plasma (or glow discharge) is partially ionized gas, electrically neutral as a whole, and it can be produced easily in low pressure gases or vapours by electrical discharge. In glow discharge of gases there are electrons, photons, ionized atoms or molecules and reactive species like free radicals, low temperature plasma technology uses these reactive species to modify surface properties or to coat the surface by polymerization. This technology can be classified into plasma treatment to modify surface physical and chemical properties and plasma polymerization (or glow discharge polymerization) to deposit thin polymer film on the surface. Inert gas (e.g., argon) or reactive gases (e.g., oxygen, nitrogen, hydrogen water vapour or air) can be used in plasma treatment process and plasma polymerization process uses monomer gases or vapours (e.g., hydrocarbons, organosilanes, fluorocarbons etc.).

The plasma polymerization is quite different from the general polymerization process (e.g., step-growth polymerization or chain growth polymerization), the property of the plasma polymer lies between organic and inorganic material and the structure of the precursor cannot be maintained in the plasma polymer. The characteristics of plasma polymers are highly cross-linked, thermally and chemically stable and any kind of solid material can be plasma polymer coated by glow discharge.

Our novel system consists of two basic steps. The 1st step is pre-treatment of the mould with inert or reactive plasma gas. The 2nd step is plasma deposition of a thin film or thin films.

The 1st step involving the plasma pretreatment with inert or reactive gas is preferable to conventional cleaning and results in better results. (If the mould is oiled, it should be cleaned by conventional methods such as solvent cleaning prior to this plasma processing.)

After plasma pretreatment with inert and reactive gas, the 2nd step is a coating process of the mould substrate with a thin layer or layers of plasma polymers in a highly evacuated chamber.

### Step 1. : Plasma Pretreatment

The overall diagram of our preferred system is shown in Fig. 1. (Note: This figure is only illustrative and one skilled in the art could design a number of effective systems with which to practice our invention. For example it would be possible for the plasma pretreatment and the plasma deposition to take place in a separate chamber in some continuous processes)

To prepare for the plasma pretreatment and plasma deposition steps the mould is placed at the center of the chamber to be floated and between the two electrodes outside the chamber which are capacitatively or inductively connected to RF (radio frequency) power supply. (In a commercial system, the number, size and shape of the mould, shapes of electrodes and their positioning would change according to the desired use, and the electrodes could move through the chamber for more uniform coating.)

FIG. 1 shows vacuum chamber 11, substrate (mould) 12, RF power supply 13, matching network 14, plasma gas shut off valve 15, plasma gas controller 16, gas vessel 17, pressure gauge 18, throttle valve 19, vacuum pump 20, and electrode 21.

Vacuum pump 20 is then used to evacuate vacuum chamber 11 until the system pressure is lower than one millitorr. The system pressure is controlled, independently of the gas flow rate, by throttle valve 19, using the reading of pressure gauge 18.

The pretreatment gas or gases (e.g., oxygen gas, argon gas or oxygen plus argon) are fed into vacuum chamber 11 at the desired flow rate, keeping the pressure below 10 torr, preferably less than one torr.

Our preferred pretreatment gas is oxygen because it removes organic contaminants effectively. Other reactive gases or inert gases or their mixture can be used. These other pretreatment gases include air, hydrogen, nitrogen, water vapour, their mixture gases and so forth.

The operation parameter of low temperature plasma processes can be given by the energy input level per mass of plasma gas, W/FM, given by Joule/Kg, where W is electric power input (W = watt) into the system, and F is the molar flow rate and M is the molecular weight of gas. (FM represents the mass flow rate). According to this relationship, the flow rate to be employed is dependent on the power input and molecular weight of gas.

This energy input per mass should be between 1 Mega Joule/Kg and 10 Giga Joules/Kg. The pretreatment plasma gas is fed through plasma gas feeding line and the flow rate is controlled by using the appropriate plasma gas flow controller 16.

Then power supply 13 is turned on to initiate the plasma state. The power is then adjusted to the desired power level. This power levels vary dependents on a flow rate, size of a substrate (mould), distance between the electrodes, molecular weight of the pretreatment gas, pressure and so forth.

The pretreatment plasma should be maintained for a desired period of time (typically from 30 seconds to 30 minutes) and then power supply 13 should be turned off and the pretreatment gas should be stopped using the appropriate plasma gas shut off valve 15.

The pretreatment time depends on the operating parameter W/FM. Efficient treatment can be obtained by maintaining the "(energy input) multiplied by (treatment time) divided by (mass)" at between 0.5GigaJoule per Kilogram and 100 GigaJoule per Kilogram. After the pretreatment plasma step the vacuum chamber 11 should once again be evacuated using vacuum pump 20 to a pressure of below one millitorr. This concludes the plasma treatment step.
Note: It should also be possible to use DC power, AC power, AF power or microwave power rather than RF(radio frequency) for the plasma pretreatment step.

### Step 2: Plasma Polymer Deposition

The basic concepts of plasma deposition are described in Professor Yasuda' book entitled Plasma Polymerization, published by Academic Press in 1985.

This is accomplished by feeding plasma deposition gas into vacuum chamber 11 through plasma gas flow controller 16 at a desired flow rate.

As in the case with the pretreatment plasma, the flow rate is dependent upon the power into the system and the molecular weight of plasma gas. This energy input per mass should be between 1 MegaJoule per Kilogram and 10 GigaJoules per Kilogram depending upon the plasma deposition gas and power level. While feeding the plasma deposition gas into the vacuum chamber 11, it is important to keep the system pressure at between one millitorr and 10 torr, preferably 10 millitorr to 2 torr and most preferably 20 to 500 millitorr.

As discussed above the system pressure is controlled, independent of the gas flow rate, by throttle valve 19 which uses the reading from pressure gauge 18.

Once the desired flow rate and system pressure is obtained the power is turned on and adjusted to the desired power level. This power level varied depend on the flow rate, size of a substrate, distance between electrodes, molecular weight of the plasma gas, pressure and so forth. The plasma deposition should continue for a desired period of time in order to obtain the desired film properties and thickness. The film thickness can range from between 10 Angstroms and 10 micrometers, preferably 100 Angstroms to 5 micrometers and most preferably 1000 Angstroms to 1 micrometer.

The deposition time is typically from 1 second to 1 hour, preferably 30 seconds to 30 minutes and most preferably 3 minutes to 20 minutes. Control of the deposition process may be based upon the "(energy input) multiplied by (deposition time) divided by (mass)". This parameter should be kept between 0.5 GigaJoule-second per Kilogram to 500 GigaJoule-second per Kilogram.

After the desired period time, power supply 13 is turned off and the plasma gas flow should be stopped by using the plasma gas shut off valve 15. The deposition time depends on the power input level divided by mass expressed in Joule per Kilogram.

Deposition that is efficient is dependent upon film adhesion, film surface properties, film hardness and film thickness.

Liquid or even solid compound can be used as the plasma deposition monomer (precursor) if enough vapour pressure can be created for the compound to feed into the vacuum system.

Our preferred plasma deposition monomers are organosilanes, fluorocarbons, hydrocarbons and mixture of silane and hydrocarbons.

Silane cannot be plasma polymerized alone, so hydrocarbon (e.g., methane, ethane, ethylene, acetylene and benzene etc.) has to be used together as carbon source during the plasma polymerization.

Our preferred organosilanes are hexamethyldisiloxane (HMDSO) and trimethylsilane (TMS). Alternatives include but are not limited to dimethylsilane (DMS), tetramethylsilane, trimethylethoxysilane, methyltrimethoxysilane, or other organosilanes which contain either silicon, oxygen, carbon, nitrogen, phosphorous, or hydrogen or their mixture, and with or without vinyl unsaturation.

Our preferred fluorocarbon is hexafluoroethylene.

Other hydrocarbons containing oxygen, nitrogen, fluoride or their mixture (e.g., methane) could be used.

In addition, organometal compounds containing antimony, phosphorous, zinc, titanium, aluminum, tin, zirconium and other metals or their mixtures could be used.

It is advantageous to use a carrier gas for the plasma polymer deposition gas (especially if the vapour of high boiling temperature is used). The carrier gases can be inert gases such as argon, helium or neon, or reactive gases such as oxygen or nitrogen (or mixtures thereof).

After conclusion of the deposition step, vacuum chamber 11 should be evacuated using a vacuum pump to a pressure below one millitorr. This concludes the deposition step.

It should be pointed out, however, that further layers of plasma polymer film may be deposited on top of the first layer. These subsequently deposited layers would be probably organic or organometallic other than silanes.

### EXAMPLES

All of the examples, unless otherwise noted, were run as generally described in the Detailed Description section infra. More specific information concerning the examples are set out below:
(1) Mould substrate : size (1.3 x 1.2 x 22.0 cm) which has been pre-cleaned with solvent if it was dirtied.
(2) Vacuum chamber : Pyrex tubular reactor of 15 cm in inside diameter x 120 cm in height
(3) Power Source : RF power supply (available from Advanced Energy Industries, Inc. as model RFX-600 with matching network)
(4) Electrode Description : Two electrodes are show in FIG. 1. Hot electrode (active) is composed of SS306 steel plate (53.5 x 5.5 x 0.1 cm), cold electrode (grounded) is composed of SS306 steel plate (53.5 x 2.8 x 0.1 cm) and both electrodes wrapped around the reactor. The distance between electrodes was 30 cm.
(5) Vacuum Pumping Mechanism : A mechanical rotary pump (available from Edwards as modeled E2M40 double stage)
(6) Pressure gauge : A capacitance barometer (available from MKS Instruments as model 112A)
(7) Throttle valve (available from MKS Instruments as model 253A and throttle valve controller (also available from MKS Instruments as model 252A)
(8) Flow controller : mass flow controller (available from MKS Instruments as model 1259B)

### EXAMPLE I

EMC mould substrate/ O₂ plasma pre-treatment / HMDSO plasma deposition
Substrate : cleaned EMC mould
O₂ plasma pre-treatment conditions: RF power was 100 watts; energy input per mass was 1.4 GigaJoule/Kg; an oxygen gas flow rate was 3.0 standard cubic centimeters per minute (sccm); system pressure was 50 millitorr and power duration was 15 minutes.
Deposition of plasma poly(hexamethyldisiloxane) using HMDSO gas: RF power was 50 watts; energy input per mass was 66.7 MegaJoule/Kg; a HMDSO gas flow rate was 6.2 standard cubic centimeters per minute (sccm), system pressure was 100 millitorr and power duration was 20 minutes.

After these plasma processes, the contact angle of pure water was measured as 95° and the critical surface tension was 23 N.m/m². Although the water contact angle and the critical surface tension of plastic varies according to the composition of moulding compounds, the water contact angle and the critical surface tension of the cured EMC were measured as 15- 25° and 50-60 N.m/m² respectively, so it is well known that the EMC can't contaminate the plasma polymer deposited mould. The plasma polymer deposited mould treated as above described releases the cured resin part transfer moulded easily. In the case of EMC with releasing agent, the mould plasma treated as above can be operated longer without any contaminants on the surface of the mould than the untreated mould.

### EXAMPLE II

EMC mould substrate/ O₂ plasma pretreatment TMS plasma deposition
Substrate : cleaned EMC mould
O₂ plasma pre-treatment conditions: RF power 100 watts; energy input per mass was 1.4 GigaJoule/Kg; an oxygen gas flow rate was 3.0 standard cubic centimeters per minute (sccm), system pressure was 50 millitorr and power duration was 15 minutes.
Deposition of plasma poly(trimethylsilane) using TMS gas: RF power was 100 watts; energy input per mass 0.59 GigaJoule/Kg; TMS gas flow rate was 3.1 standard cubic centimeters per minute (sccm), system pressure was 100 millitorr and power duration was 20 minutes.

After these plasma processes, the contact angle of pure water was measured as 85° and the critical surface tension was 30 N.m/m². Although the water contact angle and the critical surface tension of a cured resin varies according to the composition of moulding components, the contact angle and the critical surface tension of the cured EMC were measured as 15- 25° and 50-60 N.m/m² respectively, so it is well known that the EMC can't contaminate the plasma polymer deposited mould. The plasma polymer deposited mould treated as above described releases the cured resin part transfer moulded easily. In the case of EMC moulding compound with releasing agent, the mould plasma treated as above can be operated longer without any contaminants on the surface of the mould than the untreated mould.

### EXAMPLE III

EMC mould substrate/ O₂ plasma pretreatment hexafluoroethylene plasma deposition
Substrate : cleaned EMC mould
O₂ plasma pre-treatment conditions: RF power was 100 watts; energy input per mass was 1.4 GigaJoule/Kg; an oxygen gas flow rate was 3.1 standard cubic centimeters per minute (sccm), system pressure was 50 millitorr and power duration was 15 minutes.
Deposition of plasma poly(fluorethylene) using hexafluoroethylene gas: RF power was 150 watts; energy input per mass 2.80 GigaJoule/Kg; a hexafluoroethylene gas flow rate was 6.2 standard cubic centimeters per minute (sccm), system pressure was 100 millitorr and power duration was 20 minutes.

After these plasma processes, the contact angle of pure water was measured as 120° and the critical surface tension was 19 N.m/m². Although the water contact angle and the critical surface tension varied according to the composition of moulding components, the contact angle and the critical surface tension of the cured EMC were measured as 15- 25° and 50-60 N.m/m² , so it is well known that the EMC can't contaminate the plasma polymer deposited mould. The plasma polymer deposited mould treated as above described releases the cured resin part transfer moulded easily. In the case of EMC with releasing agent, the mould plasma treated as above described can be operated longer without any contaminants on the surface of the mould than the untreated mould.

### EXAMPLE IV

EMC mould substrate/ Argon (Ar.) plasma pretreatment mixture of benzene, silane and hydrogen plasma deposition
Substrate : cleaned EMC mould
Argon plasma pre-treatment conditions: RF power 100 watts; energy input per mass was 1.2 GigaJoule/Kg; an oxygen gas flow rate was 3.0 standard cubic centimeters per minute (sccm), system pressure was 50 millitorr and power duration was 15 minutes.
Deposition of plasma polymer(amorphous SiC like) using mixture of benzene, silane and hydrogen gases: RF power was 200 watts; energy input per mass 0.797 GigaJoule/Kg; flow rates of benzene, silane and hydrogen were 3.0, 2.0, 20 standard cubic centimeter per minute (sccm) respectively, system pressure was 200 millitorr and power duration was 40 minutes.

After these plasma processes, the contact angle of pure water was measured as 85° and the critical surface tension was 30 N.m/m². Although the water contact angle and the critical surface tension varied according to the composition of moulding components, the contact angle and the critical surface tension of the cured EMC were measured as 15- 25° and 50-60 N.m/m² respectively, so it is well known that the EMC can't contaminate the plasma polymer deposited mould. The plasma polymer deposited mould treated as above described releases the cured resin part transfer moulded easily. In the case of EMC with releasing agent, the mould plasma treated as above can be operated longer without any contaminants on the surface of the mould than the untreated mould.

### EXAMPLE V

EMC mould substrate/ O₂ plasma pretreatment Ar (carrier gas) + HMDSO plasma deposition
Substrate : cleaned EMC mould
O₂ plasma pre-treatment conditions: RF power 100 watts; energy input per mass was 1.4 GigaJoule/Kg; an oxygen gas flow rate was 3.2 standard cubic centimeters per minute (sccm), system pressure was 50 millitorr and power duration was 15 minutes.
Deposition of plasma poly(hexamethyldisiloxane) using HMDSO gas: RF power was 100 watts; energy input per mass 37.1 MegaJoule/Kg; an Ar gas flow rate was 5.0 standard cubic centimeters per minute (sccm) and an HMDSO gas flow rate was 1.0 standard cubic centimeters per minute (sccm), system pressure was 100 millitorr and power duration was 20 minutes.

After these plasma processes, the contact angle of pure water was measured as 95° and the critical surface tension was 23 N.m/m². Although the water contact angle and the critical surface tension varied according to the composition of moulding components, the contact angle and the critical surface tension of the cured EMC were measured as 15- 25° and 50-60 N.m/m² , so it is well known that the EMC can't contaminate the plasma polymer deposited mould. The plasma polymer deposited mould treated as above described releases the cured resin part transfer moulded easily. In the case of EMC with releasing agent, the mould plasma treated as above can be operated longer without any contaminants on the surface of the mould than the untreated mould.

## Claims

1. A method of enhancing releasing effect of a mould, which comprises:
(a) first treating the mould surface with reactive or inert gas plasma; and
(b) next depositing a thin film of plasma polymer on the mould surface by plasma polymerization.

2. A method according to claim 1, wherein the inert gas plasma is derived from by argon gas in step (a).

3. A method according to claim 1 or 2, wherein the reactive gas plasma is derived from a reactive gas selected from the group consisting of oxygen, air, and water vapour in step (a).

4. A method according to any preceding claim, wherein the plasma polymer film is derived from a mixture of silane and hydrocarbon in step (b).

5. A method according to claim 4, wherein the hydrocarbon is selected from the group consisting of methane, ethane, ethylene, acetylene, benzene, hydrogen and a mixture thereof.

6. A method according to any preceding claim, wherein the plasma polymer film is derived from an organosilane in step(b).

7. A method according to claim 6, wherein the organosilane is selected from the group consisting of methylsilane, ethylsilane, methyltrichlorosilane, dimethylsilane, trimethylsilane, tetramethylsilane, trimethylethoxysilane, methyltrimethoxysilane, methyltrithoxysilane, hexamethyldisiloxane, tetramethyldisilane, hexamethyldisilane and tetramethyldisiloxane

8. A method according to any preceding claim, wherein the plasma polymer film is derived from an fluorocarbon in step(b).

9. A method according to claim 8, wherein the fluorocarbon is hexafluoroethylene.

10. A method according to any preceding claim, wherein the deposition of plasma polymer by plasma polymerization in step (b) is accomplished with carrier gas.

11. A method according to claim 10, wherein the carrier gas is selected from the group consisting of argon, helium, neon, oxygen and hydrogen.
